# EUROPÄISCHE PATENTANMELDUNG

(11) **EP 1 757 873 A2**
(43) Veröffentlichungstag der Anmeldung: **28.02.2007**
(21) Anmeldenummer: 06400025.0
(22) Anmeldetag: 07.08.2006
(51) Int. Cl.: F24J 2/40, F24J 2/46

(54) **Schutzvorrichtung vor extremen Wettereinflüssen, insbes. für Solarkollektoren, Dachfenster, Glas-u.Kunststoffdächer, Gewächshäuser u. andere gefährdete Gegenstände**

(30) Priorität: 19.08.2005 DE 102005039721
(71) Anmelder: Mathieu, Hans, 66132 Saarbrücken (DE)
(72) Erfinder: Mathieu, Hans, 66132 Saarbrücken (DE)

(57) **Zusammenfassung**

Schutzvorrichtung zum Schutz vor extremen Wettereinflüssen,
insbesondere für Solarkollektoren, Dachfenster, Glas-und Kunststoffdächer, Gewächshäuser und andere Gegenstände.

Die Erfindung betrifft eine Schutzvorrichtung, die sowohl Überhitzungen und Stagnationen von Solaranlagen verhindert, indem sie diese oder auch viele andere Gegenstände bei zu intensiver Sonneneinstrahlung beschattet; aber auch sogar vor anderen extremsten Wettereinflüssen, wie z.B. Gewitter und Sturm mit hohen Windgeschwindigkeiten und großen Hagelsteinen schützt, ohne selbst beschädigt zu werden.
Erfindungsgemäß wird das erreicht, wenn eine die Sonnenkollektoren u.s.w. in Gefahrensituationen überdeckende, mit den erfindungsgemäßen Mitteln gestaltete Schutzvorrichtung von auf die unterschiedlichsten Wettersignale reagierenden Steuer-und Bewegungselementen geschlossen und geöffnet wird.

Der besondere Wert der Erfindung besteht darin, daß nur eine einzige Bauart der Schutzvorrichtung sowohl vergrößerte Solaranlagen ermöglicht, die eine Anhebung des Deckungsbeitrages z.B. bei solaren Heizungsanlagen auf mehr als das Doppelte, nähmlich von 25 auf über 50% erreichen kann, ohne Schäden durch die verschiedensten Wettereinflüsse befürchten zu müssen,als auch in gleicher oder ähnlicher Bauart eine Reihe von anderen gefährdeten Objekten selbst vor größten Unwettern schützt.

## Beschreibung

Die Erfindung betrifft eine Schutzvorrichtung zum Schutz vor extremen Wettereinflüssen, insbesondere für Solarkollektoren, Dachfenster, Glas-und Kunststoffdächer, Gewächshäuser und andere gefährdete Gegenstände.

Das Wetter wird immer extremer und viele Bauwerke und Teile davon entsprechen nicht mehr in ausreichendem Maße den zeitlichen Erfordernissen.

Z. B. Dächer, Dacheindeckungen im allgemeinen, Glas-und Kunststoffdächer, Dachfenster und andere auf Dächern und in Dächern montierte Einrichtungen, wie insbesondere Solaranlagen sind besonders betroffen.

Die Gewitter werden immer heftiger und die Hagelkörner werden immer größer, Schlagregen und Stürme sind weitere Gefahren.

Auch die Hitze im Sommer ist zeitweise extrem groß mit örtlich immer neuen Temperatur-Rekorden am Tag und geringer nächtlicher Abkühlung.

Für Solaranlagen sind die extreme Hagelgefahr und die extreme Hitzebildung sehr schädlich.

Die bekannten Maßnahmen zur Vermeidung der latenten Gefahren sind noch nicht ausreichend.

In dem eine Solaranlage betreffenden Gebrauchsmuster DE 20 2005 002 198 U1 und in der Patentanmeldung Akz. 10 2005 006 329.2 sind bereits wesentliche Schritte zur Vermeidung von Überhitzungen und Stagnationen in Solaranlagen beschrieben und auch die Möglichkeit der Verwendung der dort als Beschattungseinrichtungen bezeichneten Vorrichtungen auch als Schutz vor Wettereinflüssen, wie insbesondere Schnee, Hagel, Eisregen und Regen beschrieben.

Diese Beschattungseinrichtungen sind noch nicht geeignet auf Dauer auch den extremsten Unwettern ohne Beschädigung zu widerstehen und im Langzeitbetrieb in ständiger Bereitschaft funktionsfähig zu bleiben.

Auch die Verwendung der allgemein bekannten Rolläden und Rollos scheidet als Schutz vor extremer Hagelbelastung und extremer Hitzebildung für diese Anwendungen aus.

Auch die bekannten Markisen, die immerhin heute schon einen bedingten Schutz vor Regen bieten, müssen bei Unwettern mit Schlagregen,Hagel und Sturm zu ihrem eigenen Schutz in die Kassetten eingerollt werden und können keine Schutzfunktion als Überdeckung für schützenswerte Objekte übernehmen.

Der Erfindung liegt deshalb die Aufgabe zugrunde, die bestehenden Mängel auszuschalten und eine Schutzvorrichtung zu schaffen, die z.B. Solarkollektoren, Dachfenster, Glas-und Kunststoffdächer, Gewächshäuser und andere schützenswerte Objekte auch vor extremsten Wettereinflüssen schützt und auch z.B. den extremsten Hagelkörnern und größter Sonneneinstrahlung mit sich immer mehr aufschaukelnder Hitze und bei geringer nächtlicher Abkühlung, dauerhaft widerstehen kann und außerdem, weil sie die Bildung unerwünscht hoher Temperaturen in den Solarkollektoren erst garnicht entstehen läßt, die Verwendung größerer Kollektorenleistungen ermöglichen und damit den jährlichen Energieertrag ganz erheblich verbessern soll, womit die Wirtschaftlichkeit der ganzen Solaranlagen äußerst günstig beeinflußbar ist und soll auch so gestaltet werden, daß sie all den völlig unterschiedlichen Erfordernissen in einfacher Weise das ganze Jahr über als einzige Vorrichtung voll entsprechen kann und außerdem bei größter Funktionssicherheit eine lange Lebensdauer und eine besonders leichte Bauweise haben muß.

Wenn man bedenkt, daß die Problematik, der immer größer werdenden Hagelkörner, Tennisballgröße ist schon keine Seltenheit mehr,an den verheerenden Schäden an vermeintlich stabilen Objekten, wie z.B. Gebäuden, Autos und Ähnlichem immer häufiger sichtbar wird, so scheint diese Aufgabe allein wegen den Grenzen, welche die Festigkeitslehre aufzeigt, nur sehr schwierig lösbar zu sein.

Die erfindungsgemäße Lösung ergibt sich daher aus der Erkenntnis, dass die Schutzvorrichtungen keine sehr massive, schwere und teure Gebilde sein müssen, wenn diese gemäß den im kennzeichnenden Teil des Patentanspruchs 1 angegebenen Merkmalen gestaltet werden. Vorteilhafte Weiterbildungen und Nebenordnungen sind in den weiteren Patentansprüchen angegeben und in den zusätzlich beschriebenen Merkmalen der Ausführungensbeispiele.

Infolge der Erdbeschleunigung mit großer Geschwindigkeit herabfallende Gegenstände, z.B. selbst extrem große Hagelsteine, werden beim Auftreffen auf die Überdeckung, entsprechend einer den örtlichen Verhältnissen gewählten Vorspannung der Federung, kontrolliert abgebremst, wobei die Fallenergie von der Federung gespeichert wird und die Rückfederung ein Abhüpfen der Hagelkörner von der Überdeckung mit Effet bewirkt. Das Schwingungsverhalten der Überdeckung beeinflußt auch die Höhe und Weite des Abhüpfens der Hagelkörner, und die Richtung für das Abhüpfen ist durch die Neigung der Überdeckung gegenüber der Waagrechten vorausbestimmbar. Die erfindungsgemäße Nutzung des Trampolin-Effektes für die Gestaltung der Schutzvorrichtung macht die Verwendung in extremen Hagelgebieten überhaupt erst möglich.

Die Schutzvorrichtung ist dadurch gekennzeichnet, daß über den zu schützenden Gegenständen eine Überdeckung angeordnet ist, die eine auf ein bestimmtes Maß annähernd zu einer Ebene vorgespannte elastische Matte aufweist die herabfallende Massen abfedern läßt und Lichtstrahlen reflektiert.

Um bei Extremhagel und anderen Belastungen die auftretenden Durchfederungen der Matte ungehindert zu ermöglichen und eine Berührung der Matte mit den zu schützenden Objekten auszuschließen, ist ein genügend großer Abstand zwischen der Matte und dem Objekt vorausbestimmt.

Ein optimales Schwingungsverhalten der Matte ist mit zwischen den Mattenrändern und den Befestigungsstellen angeordneten Federelementen und die Vorspannung der Matte regulierenden Spannungseinrichtungen wie z.B. Schraubgewinde, Keile oder bei der Montage der Matte manuell vorspannbaren gummielastischen oder aus Metallfedern gebildeten Befestigungsteilen erreicht und damit auch ein Trampolin-Effekt.
Die Matte besteht zweckmäßigerweise z.B. aus glasfaserverstärktem, auch unter höheren Temperaturen belastbarem Material mit hoher Reißfestigkeit.

Eine gute Witterungsresistenz und lange Haltbarkeit wird z.B. mit UV-stabilisiertem Kunststoff erreicht.

Die Matte mit ihren Befestigungsteilen sollte bei einem Ausführungsbeispiel wenigstens teilweise aus Gummi oder aus gummielastischem Kunststoff bestehen.

Beispielhaft könnte die Matte aus einem hochtransparenten Kunststoff bestehen, der sich bei einer vorgegebenen Grenztemperatur, z.B. 120° C in eine, eine Beschattung gegen Lichtstrahlen bildende Farbe verfärbt und bei Erreichen eines unteren Grenzwertes wieder annähernd glasklar wird.

Bei einem Ausführungsbeispiel ist die Matte in der Art eines Trampolins in einem Rahmen verspannt. Der Rahmen besteht aus Metall z.B. rostfreiem Federstahl, Titan oder einem anderen elastischen und wetterbeständigen Material.

Die Überdeckung ist bei einem Ausführungsbeispiel mit der im Rahmen trampolinähnlich verspannten Matte als Schiebeelement, in Führungsschienen gleitend oder mit Wälzlagern ausgestatteten Rollen oder Rädern, leicht verschiebbar.

Bei größeren Neigungswinkel>̃ 30° zur Waagerechten, entsprechend den Reibungsverhältnissen ist, für die Bewegung des Schiebeelementes in die geöffnete Stellung ein Bewegungsorgan z.B. Kurbelantrieb,Gurt, Kette,Seil Feder, Federwelle, Elektromotor oder Kolben/Zylinderanordnung erforderlich und das Schließen erfolgt unter dem Einfluß der resultierenden Kraft aus dem normalen oder bewußt erhöhten Eigengewicht des Schiebeelementes.
Bei kleineren Neigungswinkeln erfolgt das Verschieben des Schiebeelementes in die geöffnete Stellung mit einem Bewegungsorgan und in die geschlossene Stellung, mit einem über ein als Gegenzug über eine Umlenkrolle wirkende Kraft, ebenfalls über ein Bewegungsorgan.

Bei einem weiteren Anwendungsbeispiel ist die Überdeckung als Rollo ausgebildet und zwischen einer als Endglied in den Führungsschienen bewegbaren Traverse und dem unteren Ende der aufrollbaren Matte ist ein, einen Trampolineffekt bewirkendes, Federelement in Form eines Gummi-oder Kunststoffstreifens eingesetzt, das z.B. durch Schrauben, Nieten, Pressen, Kleben, Schweißen oder andere Mittel einerseits mit der Matte und anderseits mit der Traverse verbunden ist.Die Matte besteht aus einer Gewebebahn mit beidseitigen Randverstärkungen, die z.B. aus Flachriemen gebildet sind.

Das Rollo wird z.B. mit einem Gegenzug von einer Federwelle, einem Gummizug, Metallfedern oder einem anderen Bewegungsorgan mit Vorspannung geschlossen. Beidseitig in die Traverse einrastende Verriegelungen fixieren die Traverse in der annähernd zu einer Ebene vorgespannten Stellung der Matte.

Das Öffnen des Rollos erfolgt von einer Temperaturdifferenzschaltung gesteuert, nachdem die Verriegelungen primär von z.B. einem Elektromagneten entriegelt wurden. In Fällen bei welchen die Schließung des Rollos wegen Hagel über eine separate Steuerung erfolgte wird die Entriegelung, mit einer vorgegebenen zeitlichen Verzögerung nach dem Ende des Hagels über diese Steuerung vom Elektromagnetschalter vollzogen.

Für das Öffnen der Schutzvorrichtung ist vorzugsweise ein Elektromotor, z.B. ein Rohrmotor angeordnet. Es kann auch jedes andere Bewegungsorgan z.B. Kurbelgetriebe, Gurt-oder Kettenantrieb oder Ähnliches für das Öffnen, Schließen und Geschlossenhalten der Schutzvorrichtung angewandt werden.

Ein ganz oder teilweises Schließen und Öffnen der Schutzvorrichtung wird z.B. durch die Anordnung von an vorausbestimmten Punkten befestigten oder verschiebbaren End-Aus-und Einschaltern erreicht.

Die Traverse ist mit die Reibung in den Führungsschienen vermindernden Gleit-oder Wälzkörpern ausgestattet und die Oberseite der Traverse ist mit einer hagelschlagdämpfenden Beschichtung oder einem gummielastischen Belag z.B. wetterbeständigem und tierfraßresistentem Schaumstoff versehen.

Bei einem weiteren Ausführungsbeispiel ist eine, über einem auf einem Schrägdach montierten Solarkollektor angeordnete, Schutzvorrichtung mit Trampolin-Effekt angeordnet, die erfindungsgemäß eine besondere Art der Befestigung der Matte in den Rillen der Führungsschienen aufweist.

An beiden Seitenrändern der Matte sind kettenartig Elemente zum Einhaken in die Rillen der Führungsschienen vorgesehen.

Diese Elemente besitzen eine durch die Wahl des Materials und ihre Formgebung eine vorausbestimmte elastische Biegsamkeit, und bogenförmige Verformbarkeit, die ein Aufspulen der Matte mit den Elementen annähernd den umschriebenen etwa spiralförmigen Kurven,der sich sukzessiv beim Aufspulen ändernden Rollenform anpassend, gestattet; aber auch noch eine genügend große Steifigkeit aufweisen, damit sich die Matte mit den Elementenketten auch bei schräg oder gar horizontal angeordneten Schutzvorrichtungen noch in ihre geschlossene Stellung drücken lassen, ohne sich stark zu verbiegen, oder gar auszuknicken.

Die Elemente sind mit in die Rillen der Führungsschienen eingreifenden, z.B. mit Gleitnocken oder Wälzkörpern mit geringer Reibung leichtgängig bewegbaren Befestigungsteilen eingehakt.

Die Elemente sind ganz oder teilweise plattenförmig zur Aufnahme von Wälzkörpern oder Gleitstücken geformt und weisen beidseitig oder einseitige Abstufungen auf, so daß sich zwei unterschiedliche Wandsärken bilden. Die Elementenflächen mit den geringeren Wandstärken weisen Ausnehmungen zur Befestigung von Wälzkörper auf. Die Wälzkörper sind einfach in die ballig ausgebildeten Ausnehmungen eindrückbar und sind danach in den Elementen fixiert und gelagert. Die Wälzkörper dienen nicht nur der leichtgängigen Bewegung der Elementenkette sondern übertragen auch die Kräfte, die bei der Durchfederung unter Vollast und schon durch die Vorspannkraft auftreten. Damit die Wälzkörper das Aufspulen der Elementenketten nicht behindern, haben diese einen kleineren Durchmesser als die größte Wandstärke der Elemente; aber die kleinste Wandsärke ist kleiner als der Durchmesser der Wälzkörper, bzw. deren Dicke.

Bei einem weiteren Ausführungsbeispiel sind die Elemente als homogene Formstücke ausgebildet,mit in den Führungsschienen gleitenenden festen Gleitnocken. Die Elemente mit der damit verbundenen Matte sind mit einer Vorspannung mit ihren Wälzkörpern oder Gleitnocken in die Rillen oder Führungsschienen eingeführt und die Matte annähernd in die Form einer ebenen Fläche vorgespannt.

Die verfahrensmäßige Anwendung der Schutzvorrichtung ist sehr vorteilhaft, wenn eine erfindungsgemäße mit einem Trampolin-Effekt gestaltete, sich über das zu schützende Objekt erstreckende Schutzvorrichtung derart arbeitet, daß insbesondere zur Vermeidung der Verdunstung von Solarflüssigkeit in Solaranlagen bei Erreichen einer Grenztemperatur, unterhalb des dem gewählten Wärmeträgermedium entsprechenden Siedepunktes, die infolge zu starker Sonneneinstrahlung oder zu geringer Wärmeableitung oder einer Störung im Betrieb der Anlage z.B. bei Stromausfall auftreten würde, eine auf einen bestimmten Temperaturbereich eingestellte oder einstellbare Temperaturdifferenzschaltung mit Hilfe eines Bewegungsorgans eine Schließung einer der Beschattung dienenden Schutzvorrichtung bewirkt und in einer vorausbestimmten Endstellung eine Verriegelung einrastet, und daß bei einer Abkühlung auf die untere Temperatur des an der Temperaturdifferenzschaltung vorgegebenen Wertes eine Entriegelung und dann Öffnung der Schutzvorrichtung über ein Öffnungsorgan erfolgt und die Solaranlage wieder ohne Weiteres voll in Betrieb geht und bei anderen Wettereinflüssen insbesondere Hagel und Extremhagel über eine z.B. akustisch, optisch oder mechanisch beeinflußte Steuerung ebenfalls eine Schließung und Verriegelung der Schutzvorrrichtung erfolgt und beim Nachlassen des Hagels-oder Extremhagels die Steuerung nach einer vorgegebenen Zeitspanne die Entriegelungseinrichtung und das Bewegungsorgan zum Öffnen der Schutzvorrichtung wieder einschaltet und die zuvor ganz überdeckte Fläche wieder entsprechend der vor dem Hagel-oder Extremhagelschauer vorprogrammierten Stellung ganz oder teilweise öffnet.

### Folgende Vorteile werden im wesentlichen erreicht:

Erfindungsgemäß ist die Schutzvorrichtung in allen wetterbedingten und sonstigen Notsituationen verwendbar. Die Reaktion der Schutzvorrichtung auf die einzelnen Situationen erfolgt ganz oder teilweise automatisch unter dem Einfluß netzstromunabhängiger Regel-und Bewegungsorgane. Auch ein manuelles Schließen und Öffnen ist möglich.

Die Schutzvorrichtung kann sowohl zum Schutz von Solarkollektoren, Dachfenstern, Glas-und Kunststoffdächern, Gewächshäusern und anderen schützenswerten Gegenständen gegen die unterschiedlichsten und extremsten Wettereinflüsse und Gefahren verwandt werden, wie auch allgemein zur Beschattung. Bei der Verwendung der Schutzvorrichtung im Zusammenhang mit thermischen Solarkollektoren besteht ein besonderer Vorteil auch darin, daß in den Kollektoren erst gar keine Temperaturen oberhalb des Siedepunktes des Wärmeträgermediums entstehen können und daher jede Stagnation der Anlagen sicher zu vermeiden ist. Aus diesem Grunde können die Kollektorenleistungen wesentlich größer ausgelegt werden und damit auch der Energieertrag der Solaranlagen ganz wesentlich gesteigert werden.
Die Solaranlagen werden auch für die Raumbeheizung somit erst interessant.
Der jährliche Energieertrag wird insgesamt sehr bedeutend verbessert. Die erfindungsgemäße Schutzvorrichtung ermöglicht insbesondere in extremen Hagelgebieten erst die Anwendung von Solaranlagen mit Beschattungseinrichtungen oder gar von Solaranlagen überhaupt.
Auch Dachfenster, Glas-oder Kunststoffdächer, Gewächshäuser und Ähnliches werden in Gebieten mit extremer Hagelgefahr mit immer größer werdenden Hagelkörnern erst in großem Maße möglich, wenn erfindungsgemäß eine wirklich dauerhafte Haltbarkeit und Funktionssicherheit gewährleistet ist.

Weitere Vorteile und Einzelheiten der Erfindung sind in nachfolgender Beschreibung bevorzugter Ausführungsbeispiele, anhand von Prinzipskizzen Fig. 1 bis 15 dargestellt.

Es zeigen schematisch:
- Fig. 1: einen Querschnitt einer auf einem Schrägdach montierten Schutzvorrichtung für Solarkollektoren als Schiebeelement in Trampolin-Bauweise.
- Fig. 2: eine Draufsicht auf die erfindungsgemäße Schutzvorrichtung in ganz geschlossener Stellung und strichpunktiert gezeichneter geöffneter Stellung.
- Fig. 3: einen Querschnitt einer auf einem Schrägdach montierten aufrollbaren Schutzvorrichtung für Solarkollektoren mit Spannvorrichtung zur Einstellung des Schwingungsverhaltens, in geschlossener Stellung mit unterbrochen dargestellter Führungsschiene.
- Fig. 4: eine teilweise Draufsicht auf die erfindungsgemäße Schutzvorrichtung,in geschlossener Stellung und mit nur teilweise angedeuteter Matte, um den darunter befindlichen Solarkollektor teilweise sichtbar zu machen.
- Fig. 5: eine ebenfalls über einem auf einem Schrägdach montierten Solarkollektor angeordnete Schutzvorrichtung in Rollobauweise mit Gegenzug, im Querschnitt, in geschlosssener Stellung mit unterbrochen dargestellter Führungsschiene
- Fig. 6: eine teilweise Draufsicht auf die erfindungsgemäße Schutzvorrichtung.
- Fig. 7: einen Querschnitt einer auf einem Schrägdach montierten Schutzvorrichtung für Solarkollektoren als Rollo ausgebildet und mit Trampolin-Effekt, jedoch ohne Gegenzug.
- Fig. 8: eine teilweise Draufsicht in ganz geschlossener Stellung, mit Darstellung von kettenartig an beiden Seitenrändern der Matte angeordneten Elementen zum Einhaken in die Führungsschienen.
- Fig. 9: eine Draufsicht auf zwei aneinandergereihte Elemente, als Detail im vergrößerten Maßstab.
- Fig.10: einen Querschnitt eines in einer Führungsschiene mit Wälzkörpern leicht verschiebbar und auf eine Welle aufrollbaren, elastischen Elementes zur Befestigung der Matte der Schutzvorrichtung in den Führungsschienen.
- Fig.11: eine Seitenansicht der beweglich aneinandergereihten Elemente mit prinzipieller Darstellung der Biegsamkeit der elastischen Elemente.
- Fig.12: einen Querschnitt durch ein mit Gleitnocken ausgebildetes Element in einer Führungsschiene.
- Fig. 13: eine perspektivische Ansicht auf eine als Überdeckung über einem Solarkollektor auf einem Schrägdach angeordnete Schutzvorrichtung, die als Rollo ausgebildet ist und die Matte in teilweise geöffneter Stellung.
- Fig. 14: einen Detailpunkt A in vergrößertem Maßstab als Draufsicht zu Fig. 13
- Fig. 15: einen Querschnitt des vergrößert dargestellten Details A in Fig. 14.

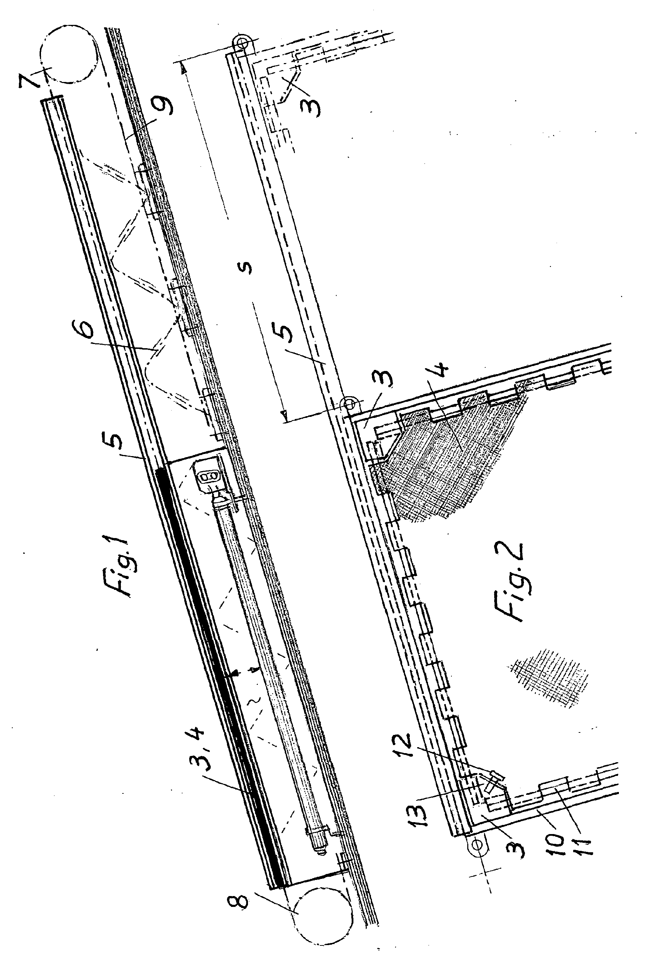

Es zeigt Fig. 1 einen Solarkollektor 1, auf einem Schrägdach 2 und eine als Schiebeelement 3 ausgebildete Schutzvorrichtung mit einer Matte 4 als Überdeckung des Solarkollektors 1, in geschlossener Stellung. Strichpunktiert ist die geöffnete Stellung angedeutet.
Das Schiebeelement 3 ist in den Führungsschienen 5, die mit einer leichten Tragkonstruktion 6 auf dem Schrägdach 2 befestigt sind und mit Wälz- oder Gleitlagerungen ausgestattet sind, leicht verschiebbar gelagert und geführt. Ein das Öffnen und Schließen des Schiebeelementes 3 bewirkendes Bewegungsorgan 7 zieht ein über eine Umlenkrolle 8 geführtes Seil 9, Gurt, Kette oder Ähnliches, das Schiebeelement 3 in die geschlossene Stellung und in umgekehrter Richtung zieht das Bewegungsorgan 7 das Schiebeelement direkt in die geöffnete Stellung.

Fig.2 Die Matte 4 ist in einem als Schiebeelement 3 ausgebildeten Rahmen10 mit Federstangen 11 befestigt. In den vier Rahmenecken sind die Spannschrauben 12,die in Spannbacken 13 eingreifen, angeordnet.Die Federstangen11 sind damit verstellbar und die gewünschte Vorspannung der Matte 4 und ein optimales Schwingungsverhalten erreichbar.

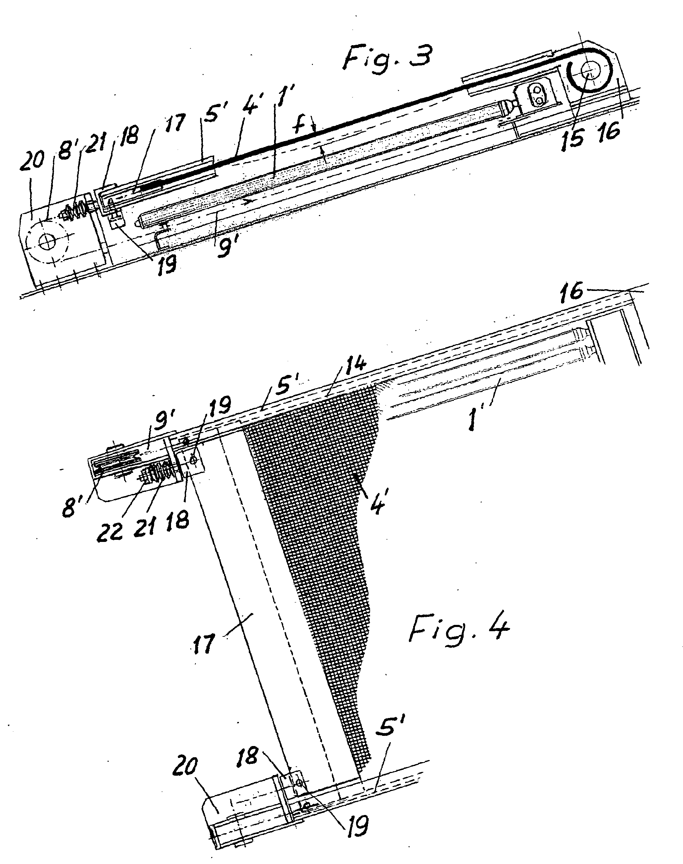

Fig. 3 einen Solarkollektor 1' auf einem Schrägdach 2' mit einer Schutzvorrichtung mit aufrollbarer Matte 4', Führungsschiene 5', einer Federwelle mit Rohrmotor 15 in einem Aufsatzkasten 16, und am unteren Ende der Matte 4 ist eine Traverse 17 befestigt, die in die geschlossene Stellung in die Halter 18 von der Kraft der Federwelle 15 über den Gegenzug des über die Umlenkrolle 8' wirkenden Seiles 9' gezogen ist und mit der Verriegelung 19 , die am Halter 18 befestigt ist,und die in eine Ausnehmung in der Traverse 17 eingreift, arretiert ist. Die auf den Schäften der beiden Halter 18 geführten und sich gegen die Lagerböcke 20 abstützenden Tellerfedern 21 sind mit den Spannmuttern 22 vorgespannt, so daß die Matte 4' in unbelastetem Zustand annähernd zu einer ebenen Fläche gespannt ist. Die gestrichelte Linie unterhalb der Matte 4' soll mit dem Maß "f" die elastische Durchfederung der Matte 4' bei Belastung, z.B. durch extremsten Hagel, darstellen.

Fig. 4 Den Solarkollektor 1', die Matte 4' mit den Randverstärkungen 14 und die mit der Matte 4' z.B. durch Kleben, Pressen, Schweißen, Nieten Schrauben oder andere Befestigungsmittel verbundene Traverse 17 und die zur Anordnung der Umlenkrollen 8' und der Halter 18 mit den Tellerfedern 21 ausgebildeten Lagerböcke 20.

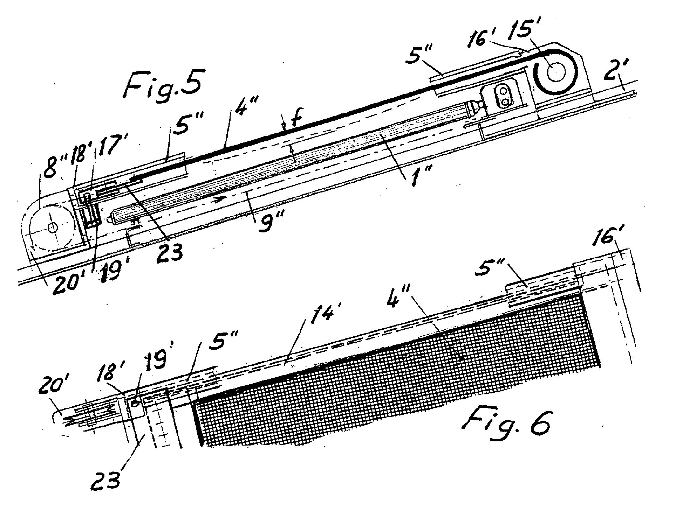

Fig. 5 einen Solarkollektor 1" auf einem Schrägdach 2" mit einer Schutzvorrichtung mit aufrollbarer Matte 4", Führungsschienen 5", einer Federwelle mit Rohrmotor 15' in einem Aufsatzkasten 16' und am unteren Ende der Matte 4" ist ein elastischer Streifen 23 aus Gummi oder Kunststoff befestigt, der mit einer als Endglied ausgebildeten Traverse 17' verbunden ist, die in die geschlossene Stellung in die Halter 18' mit der Kraft der Federwelle 15' über den Gegenzug des über die Umlenkrolle 8' wirkenden Seiles 9" gezogen ist, wobei der Streifen 23 und die Matte 4" vorgespannt wurden und mit der Verriegelung 19', die am Halter 18' befestigt ist und die in eine Ausnehmung in der Traverse 17' eingreift, arretiert ist. Die Matte 4" ist in unbelastetem Zustand annähernd zu einer ebenen Fläche gespannt. Die gestrichelte Linie unterhalb der Matte 4" soll mit dem Maß "f" die elastische Durchfederung der Matte 4", z.B. bei extremsten Hagel darstellen.

Fig. 6 die aufrollbare Schutzvorrichtung mit der Matte 4", die an beiden Seitenrändern Randverstärkungen 14' aufweist und einen mit der Matte 4" verbundenen elastischen Streifen 23, der seinerseits mit der Traverse 17' verbunden ist und die zur Anordnung der Umlenkrollen 8" und der Halter 18' ausgebildeten Lagerböcke 20'.

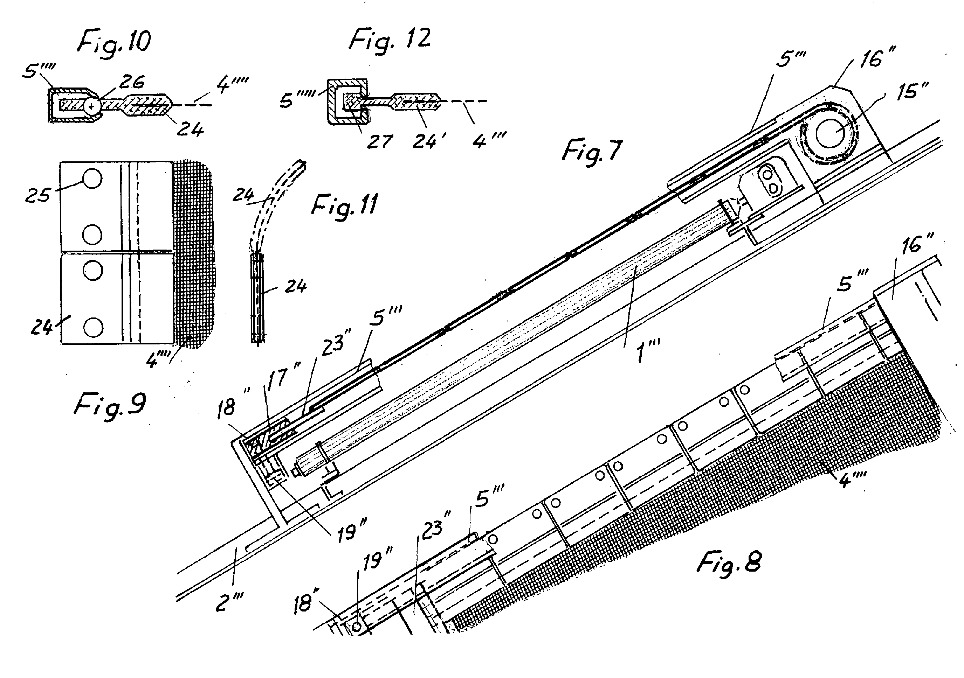

Fig. 7 einen Solarkollektor 1"' auf einem Schrägdach 2"' mit einer Schutzvorrichtung mit aufrollbarer Matte 4"", Führungsschienen 5"', einer Traverse 17", elastischer Streifen 23", einem Halter 18" und einer Verriegelung 19", einer Federwelle mit Rohrmotor 15", einem Aufsatzkasten 16".

Fig. 8 am unteren Ende der Matte 4"' ist ein elastischer Streifen 23" aus Gummi oder Kunststoff befestigt, der mit einer als Endglied ausgebildeten Traverse 17" verbunden ist, die mit der Kraft der Federwelle 15" über die an beiden Seiten der Matte 4"" aneinandergereihten Elemente 24 mit Vorspannung in die geschlossene Stellung in die Halter 18" gedrückt wurde und mit der Verriegelung 19", die am Halter 18" befestigt ist und die in eine Ausnehmung in der Traverse 17" eingreift, arretiert ist.

Fig. 9 Die Elemente haben Ausnehmungen 25, zur Aufnahme von Kugeln 26.

Fig.10 Die Kugeln 25, die dem Verhaken der Elemente 24, in den Laufrillen der Führungsschienen 5"" dienen und die Reibung vermindern, haben einen größeren Durchmesser als die Dicke der Elemente im abgestuften dünneren Bereich; aber einen kleineren Durchmesser als die Gesamtdicke der Elemente beträgt.

Fig. 11 Eine prinzipielle Skizze der Elemente 24,strichpunktiert in elastisch gebogener Stellung.

Fig. 12 Ein Element 24 mit Gleitnocken 27 als Formstück mit eingeschweißter,-gepreßter, oder z.B.-geklebter Matte 4"" in der Führungsschiene 5""' gleitend. Das Element 24' weist, um gleiche Wickeldurchmesser und eine größere Fläche beim Aufspulen zu erreichen, an den Nocken 27 etwa die gleiche Wandstärke auf wie die größte Materialdicke des Elementes.

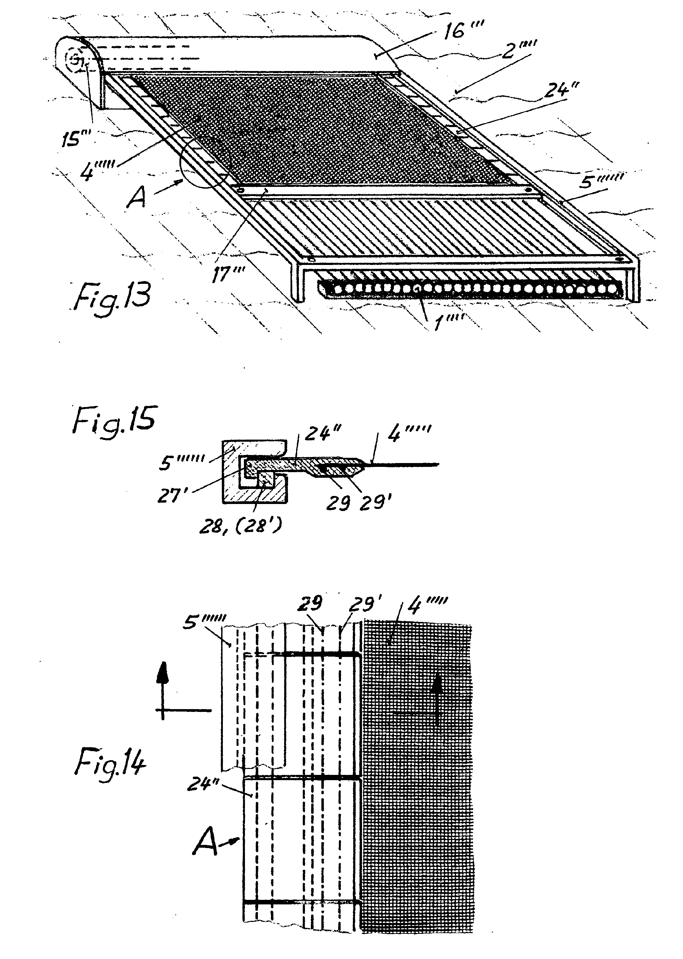

Fig. 13 Eine als Rollo ausgebildete Schutzvorrichtung mit der Matte 4""' in teilweise geschlossener Stellung. Im Aufsatzkasten 16"' ist mit gestrichelten Linien die Federwelle mit Rohrmotor 15"' angedeutet. Die an den Seitenrändern der Matte 4""'befestigten Elemente 24" sind in den Nuten der Führungsschienen 5""" eingehakt. Die am unteren Ende der Matte 4""' befestigte Traverse 17"' ist beidseitig in den Führungsschienen 5""" gleitend geführt.

Fig. 14 Den Detailpunkt A in vergrößertem Maßstab mit der Matte 4""' und den daran befestigten, kettenförmig aneinandergereihten Elementen 24" und die strichpunktiert angedeuteten Litzen z.B. aus Stahlcord oder Ryoncord oder z.B. Hightech-Fasern 29 und 29' als elastische Verbindungen der Elemente 24".

Fig. 15 Die Matte 4""' als Beispiel mit den Litzen 29 und 29' in den Elementen 24" zu einer Einheit verbunden. Die Elemente 24" sind in die Nuten der Führungsschienen 5""" mit Vorspannung eingeschoben und mit die Reibung der Elemente 24" in den Führungsschienen 5""" vermindernden, den Federweg vergrößernden und den Gleitnocken 27' als Gegenlager dienenden Federprofilen 28 verschleißmindernd geführt oder z.B. mit Wälzkörpern 28'.

Ein weiteres, nicht gesondert zeichnerisch dargestelltes, Ausführungsbeispiel besteht darin daß sinngemäß dem Profil in Fig. 15 dargestellten aneinandergereihten Elemente 24" durchlaufende Flachriemen z.B. aus Kunststoff oder Kautschuk an den Seitenrändern der Matte 4""' befestigt sind, die vergleichbare Federungs-und Gleiteigenschaften und eine ähnliche elastische Verformbarkeit aufweisen, wie die Elemente 24". Es können aber auch z.B. durchlaufende Flachriemen statt der in Fig.10 und 11 dargestellten Elemente 24 oder 24' mit sinngemäß ähnlichem Profil, mit z.B. Aussparungen 25 und Wälzkörpern 26 oder Gleitnocken 27 ausgebildet sein oder jede andere dem gleichen Zweck dienende Gestaltung gewählt werden.

Ein weiteres nicht zeichnerisch dargestelltes Ausführungsbeispiel einer Schutzvorrichtung beinhaltet eine Matte, aus hochelastischem, durchsichtigem Kunststoff, der infolge seiner chemischen Zusammensetzung unter Temperatureinfluß seine Lichtdurchlässigkeit verändert, die in einem feststehenden Rahmen mit Federelementen verspannt ist und die sich bei einer vorgegebenen oberen Grenztemperatur in eine weitgehend gegen Lichtstrahlen schützende Farbe verfärbt und bei Abkühlung auf einen unteren Grenzwert wieder annähernd glasklar wird. Diese Ausführung ist für eine permanente Überdeckung von Objekten geeignet, vorzugsweise aber nicht ausschließlich für Anwendungsfälle , die die Anordnung von Schutzvorrichtungen mit beweglichen Matten nur unter besonders schwierigen örtlichen Voraussetzungen ermöglichen würden.

Bei einem anderen nicht zeichnerisch dargestellten Beispiel ist es möglich, eine als Rollo ausgebildete Schutzvorrichtung derart zu gestalten, daß statt der Elemente 24,24',24" zwischen den beiden Seitenrändern der Matten 4' bis 4""' und den Führungsschienen 5' bis 5""" als federnde Verbindungsglieder kurze Stücke von Rolladenprofile aus Metall oder z.B. verstärktem Kunststoff angeordnet sind, die in die Führungsschienen 5' bis 5""" eingreifende sich verhakende und in den Führungsschienen leichtgängig verschiebbare Bauteile aufweisen, z.B. Gleitstücke, Ausnehmungen mit eingesetzten Wälzkörpern oder andere eine Sprungmattenfunktion ermöglichende Gebilde.Das andere Ende der Profilstücke ist direkt mit den seitlichen Rändern der Matten 4' bis 4""' oder z.B. mit an den Matten befestigten Federelementen, wie z.B. hochelastischen Gummi-oder Kunststoffstreifen,-Bändern oder anderen einen Sprungmatteneffekt und eine auch die auftretenden Wärmedehnungen ausgleichenden und erforderliche Vorspannungen gestattenden Elementen verbunden.

Die Erfindung ist selbstverständlich nicht auf die gewählten Ausführungsbeistpiele beschränkt. Weitere Beispiele sind möglich, wenn die Überdeckung einen Rahmen mit einer in diesem verspannten Sprungmatte aufweist.

### Aufstellung der Bezugszeichen:

- 1, 1',1'',1''',1'''',: Solarkollektor
- 2,2',2'',2''',2'''',: Schrägdach
- 3: Schiebeelement
- 4,4',4'',4''',4'''',4''''',: Matte
- 5,5',5'',5''',5'''',5''''',5'''''',: Führungsschiene
- 6: Tragkonstruktion
- 7: Bewegungsorgan
- 8,8',8'',: Umlenkrolle
- 9,9',9'',: Seil, Gurt, Kette oder Ähnliches
- 10: Rahmen
- 11: Federstangen
- 12: Spannschrauben
- 13: Spannbacken
- 14,14',: Randverstärkungen
- 15,15',15'',15''',: Federwelle mit Rohrmotor
- 16,16',16'',16''',: Aufsatzkasten
- 17,17',17'',17''',: Traverse
- 18,18',18'',: Halter
- 19,19',19'',: Verriegelung
- 20,20',: Lagerbock
- 21: Tellerfedern
- 22: Spannmuttern
- 23,23',: elastischer Streifen
- 24,24',24'',: Element
- 25: Ausnehmungen
- 26: Wälzkörper
- 27,27',: Gleitnocken
- 28: Federpufferprofil
- 28',: oder z.B. Wälzkörper
- 29,29',: Stahlcord-, Ryoncord oder Hightech-Litze

## Patentansprüche

1. Schutzvorrichtung vor extremen Wettereinflüssen insbesondere für Solarkollektoren, Dachfenster, Glas-und Kunststoffdächer, Gewächshäuser und andere gefährdete Gegenstände.
**dadurch gekennzeichnet,**
**daß** über den zu schützenden Gegenständen z.B. Solarkollektoren (1,1', 1", 1"', 1"") eine Überdeckung angeordnet ist, die eine auf ein vorbestimmtes Maß annähernd zu einer Ebene vorgespannte, in der Art einer Sprungmatte ausgebildete, herabfallende Massen abfedernde und vor Lichtstrahlen schützende elastische Matte (4, 4',4",4"',4"",4""') aufweist.

2. Schutzvorrichtung gemäß Anspruch 1 ,
**dadurch gekennzeichnet,**
**daß** die Überdeckung wenigstens auf einer der gegenüberliegenden Seiten des Rahmens (10) oder von einander gegenüber angeordneten Führungsschienen (5',5",5"',5"",5""',5""") eine Vorspannung der Matte bewirkende und ein vorausbestimmtes Pufferverhalten der Matte (4,4',4"",4"',4"",4""'), gegen herabfallende Massen ermöglichende Federelemente z.B. Federstangen (11), Tellerfedern (21), elastische Streifen(23,23') oder Elemente (24,24', 24") oder auch andere hochelastische Bauteile aufweist.

3. Schutzvorrichtung nach Anspruch 1 oder 2,
**dadurch gekennzeichnet,**
**daß** die Überdeckung ein oder mehrere ein optimales Schwingungsverhalten der Matte (4,4',4",4"',4"",4""') bewirkende, die Vorspannung und/oder die die Federungssteifigkeit regulierende oder vorausbestimmende Einrichtungen, z.B. Spannschrauben(12) oder Spannmuttern (22), Federpufferprofile(28) oder andere Federkörper, wie z.B. hochelastische Wälzkörper(28') aufweist.

4. Schutzvorrichtung gemäß Anspruch 1, 2 oder 3,
**dadurch gekennzeichnet,**
**daß** zwischen der Matte (4,4',4",4"',4"",4""') und der Oberfläche der zuschützenden Objekte z.B. Solarkollektoren (1,1',1",1"',1"") ein, bei Extremhagel und anderen Belastungen auftretenden Durchfederungen, eine Berührung der Matte (4,4',4"",4"',4"",4""') mit den zu schützenden Objekten z.B. Solarkollektoren(1,1',1",1"',1"") auschliessender Abstand besteht.

5. Schutzvorrichtung gemäß einem vorausgegangenen Anspruch,
**dadurch gekennzeichnet,**
**daß** die Überdeckung ein flaches Schiebeelement (3) aufweist oder in Kastenform.

6. Schutzvorrichtung gemäß einem vorausgegangenen Anspruch,
**dadurch gekennzeichnet,**
**daß** eine als Rollo ausgebildete,mit einer mittels Federelementen in der Art eines Trampolins verspannt gestalteten Überdeckung, zeitweise über die zu schützenden Objekte mit Bewegungsorganen, z.B. einer Federwelle mit Rohrmotor(15,15' oder 15") oder anderen Antrieben bewegbar ist.

7. Schutzvorrichtung gemäß einem vorausgegangenen Anspruch,
**dadurch gekennzeichnet,**
**daß** die Überdeckung eine elastische Matte (4,4',4",4"',4"",4""'),aus auch unter höheren Temperaturen dauerhaft belastbarem Material,wie z.B. glasfaserverstärktem Kunststoff, High-Tech-Gewebe oder anderen Materialien mit hoher mechanischer und wetterbedingter Belastbarkeit, aufweist.

8. Schutzvorrichtung gemäß einem vorausgegangenen Anspruch,
**dadurch gekennzeichnet,**
**daß** die Matte (4,4',4",4"',4"",4""') aus einem hochtransparenten Kunststoff besteht,der sich infolge seiner chemischen Zusammensetzung bei einer vorgegebenen Grenztemperatur in eine, eine Beschattung gegen Lichtstrahlen bildende Farbe verfärbt und bei Erreichen eines unteren Grenzwertes wieder annähernd glasklar wird.

9. Schutzvorrichtung gemäß einem vorausgegangenen Anspruch,
**dadurch gekennzeichnet,**
**daß** die Matte (4',4",4"',4"") aus einer Gewebebahn mit beidseitigen Randverstärkungen(14,14') besteht und daß die Randverstärkungen z.B aus an den Mattenrändern befestigten hochelastischen als Federn dienenden Flachriemen, die in Längsrichtung wenigstens eine Nut aufweisen und deren von der Matte(4',4",4"',4"") am weitesten entfernte Nutflanken an einer Gegenfläche in den Führungsschienen (5,5') anliegend, gleitend geführt werden.

10. Schutzvorrichtung gemäß einem vorausgegangenen Anspruch,
**dadurch gekennzeichnet,**
**daß** die Traverse (17,17',17") auf ihrer oberen Fläche eine Hagelschlag dämpfende Beschichtung oder einen gummielastischen Belag aufweist und daß sie in den Führungsschienen (5',5",5"',5"",5""') gleitend oder mit Laufrollen und Wälzlagern leicht bewegbar ist.

11. Schutzvorrichtung gemäß einem vorausgegangenen Anspruch,
**dadurch gekennzeichnet,**
**daß** das Rollo vorzugsweise mit einem Gegenzug z.B. von einer Federwelle mit Rohrmotor (15,15',15") einem Gummizug, Metallfedern,einer oder mehreren Gasdruckfedern oder einem anderen Bewegungsorgan mit Vorspannung geschlossen oder geschlossen gehalten wird.

12. Schutzvorrichtung gemäß einem vorausgegangenen Anspruch,
**dadurch gekennzeichnet,**
**daß** für das Öffnen der Schutzvorrichtung vorzugsweise ein Elektromotor z.B. ein Rohrmotor angeordnet ist und daß die Steuerung des Elektromotors über einen Temperaturdifferenzschalter und/oder über Hagelsteuerung erfolgt, und daß im Prinzip auch jedes andere Bewegungsorgan z.B. Kurbelgetriebe, Gurt-oder Kettenantrieb für das Öffnen, Schließen und Geschlossenhalten der Schutzvorrichtung gewählt werden kann.

13. Schutzvorrichtung gemäß einem vorausgegangenen Anspruch,
**dadurch gekennzeichnet,**
**daß** die Matte (4',4",4"',4"",4""') als Sprungmatte gestaltet ist und mit seitlich in den Führungsschienen (5',5",5"',5"",5""') verhakten Elementen (24,24',24") leicht in den Führungsschienen gleitbar befestigt ist.

14. Schutzvorrichtung gemäß einem vorausgegangenen Anspruch,
**dadurch gekennzeichnet,**
**daß** die Elemente(24,24',24") elastisch biegsam, sich der sich sukzessiv beim Aufspulen ändernden Rollenform anpassend gestaltet sind und daß die Elemente in ihrer Materialauswahl und Formgebung einerseits zwar elastisch verformbar sind, andererseits aber auch mit einer ausreichenden Steifigkeit so ausgelegt sind, daß sie sich sowohl gut auf eine Welle aufspulen lassen, wie auch bei waagerecht oder nur wenig geneigt angeordneten Führungsschienen mit einer abwärts bzw. horizontal gerichteten Kraft noch in eine ganz oder teilweise geschlossene Position der Schutzvorrichtung drücken lassen, ohne sich zu stark zu verformen oder gar auszuknicken.

15. Schutzvorrichtung gemäß einem vorausgegangenen Anspruch,
**dadurch gekennzeichnet,**
**daß** die Elemente (24,24',24") z.B. ganz oder teilweise plattenförmig ausgebildet sind und Ausnehmungen (25) zur Aufnahme von Wälzkörpern (26) oder Gleitstücken aufweisen.

16. Schutzvorrichtung gemäß einem vorausgegangenen Anspruch,
**dadurch gekennzeichnet,**
**daß** die Wälzkörper(26) im Durchmesser oder Gleitschtücke in ihrer Höhe kleiner sind als die größte Dicke der Elemente (24,24'); aber größer als die Elemente an ihrem abgeflachten Bereich.

17. Schutzvorrichtung gemäß einem vorausgegangenen Anspruch,
**dadurch gekennzeichnet,**
**daß** die an den Mattenrändern aneinandergereiht befestigten Elemente (24, 24',24") unter vorausbestimmter Vorspannung der Elemente und der elastischen Matte (4"',4"") in die Rillen der Führungsschienen (5"',5"",5""') einführbar sind und das obere Elementepaar an der zum Öffnen und Schließen der Schutzvorrichtung dienenden Federwelle (mit Rohrmotor)(15,15', 15") befestigt ist und das untere Elementepaar und die Matte an der Traverse (17,17',17",17"'), oder an den elastischen Streifen (23,23", 23"').

18. Schutzvorrichtung gemäß einem vorausgegangenen Anspruch,
**dadurch gekennzeichnet,**
**daß** die Elemente (24,24',24") mit einseitigen oder doppelseitigen Gleitnocken (27) ausgebildet sind, deren Dicke vorzugsweise aber nicht ausschließlich der größten Dicke der Elemente entspricht.

19. Schutzvorrichtung gemäß einem vorausgegangenen Anspruch,
**dadurch gekennzeichnet,**
**daß** die Matte (4""') mit z.B. durchlaufenden Litzen (29,29') oder Seilen aus Stahl, Ryoncord, High-Tech-Fasern oder einem anderen Material mit ähnlichen Eigenschaften mit den Elementen (24.24',24") gemeinsam zu einer leicht aufrollbaren und beweglichen Einheit verbunden ist.

20. Schutzvorrichtung gemäß einem vorausgegangenen Anspruch,
**dadurch gekennzeichnet,**
**daß** z.B. statt aneinandergereihter Elemente (24,24',24",) die Matte(4', 4",4"',4"") wenigstens an einem Mattenrand einen durchlaufenden, hochdehnbaren, elastischen, mit mindestens einer Längsnut oder einem in Längsrichtung verlaufenden Wulst ausgebildeten Flachriemen aufweist, der z.B. auch Aussparungen (25) zur Aufnahme von Wälzkörpern (26) oder Gleitkörpern aufweisen kann.

21. Schutzvorrichtung gemäß einem vorausgegangenen Anspruch,
**dadurch gekennzeichnet,**
**daß** die Elemente (24,24',24") in den Führungsschienen (5""") mit, Reibung vermindernden, den Federweg vergrößernden und den Gleitnocken (27, 27') oder den Wälzkörpern (26) als Gegenlager für die Übertragung von Reaktionskräften und der Federkraft dienenden, Federpufferprofilen(28) oder einem anderen Teil mit guten Feder-und Gleiteigenschaften geführt sind.

22. Schutzvorrichtung gemäß einem vorausgegangenen Anspruch,
**dadurch gekennzeichnet,**
**daß** die Elemente in der Art von Rolladenprofilen ausgebildet und auf eine Welle aufrollbar sind und die kurzen Profilstücke in die Führungsschienen (5',5",5"',5"",5""',5""")ragende hakenförmige elastische leicht bewegbare Gebilde aufweisen und mit ihrem anderen Ende mit den Matten(4',4",4"',4"", 4""') verbunden sind oder mit an den Matten befestigten Federelementen.
